# EUROPEAN PATENT APPLICATION

(11) **EP 4 443 569 A2**
(43) Date of publication of application: **09.10.2024**
(21) Application number: 24168275.6
(22) Date of filing: 03.04.2024
(51) Int. Cl.: H01M 8/04014, H01M 8/04029, H01M 8/04111, H01M 8/04082, H01M 8/0662

(54) **HEAT EXCHANGER COOLING SYSTEMS AND AUXILIARY POWER GENERATION ON LIQUID HYDROGEN-FUELED AIRCRAFTS**

(30) Priority: 04.04.2023 US 202318130540
(71) Applicant: Hamilton Sundstrand Corporation, Charlotte, NC 28217-4578 (US)
(72) Inventor: PAL, Debabrata, Hoffman Estates, 60195 (US); KILCHYK, Viktor, Lancaster, NY 06110 (US)
(74) Representative: Dehns

(57) **Abstract**

A system includes a fuel cell stack (102). A heat exchanger (104) has an air passage (106) in thermal communication with an H₂O passage (108) for heat exchange between air and H₂O. An exhaust outlet (110) of the fuel cell stack is connected in fluid communication with an H₂O inlet (112) of the heat exchanger for supplying H₂O to the heat exchanger.

## Description

### BACKGROUND

### 1. Field

The present disclosure relates to hydrogen fueled systems, and more particularly to hydrogen systems for aircraft with hydrogen powered fuel cells and/or gas turbine engines.

### 2. Description of Related Art

Hydrogen powered fuel cells and gas turbine engines can use cryogenically compressed liquid H₂ stored in tanks. The liquid H₂ is used as fuel for power generation in fuel cells. It can also be used as a combustion fuel for a gas turbine engine. Due to very low storage temperature, there is considerable cooling as well as expansion power capability present in cryogenically stored H₂.

The conventional techniques have been considered satisfactory for their intended purpose. However, there is an ever-present need for improved systems and methods for hydrogen fueled systems. This disclosure provides a solution for this need.

### SUMMARY

A system includes a fuel cell stack. A heat exchanger has an air passage in thermal communication with an H₂O passage for heat exchange between air and H₂O. An exhaust outlet of the fuel cell stack is connected in fluid communication with an H₂O inlet of the heat exchanger for supplying H₂O to the heat exchanger.

The air passage of the heat exchanger can have an inlet connected to receive air inlet from a source. The air passage of the heat exchanger can have an outlet in fluid communication with both an aircraft cabin for supplying air conditioned air from the heat exchanger to the aircraft cabin, and with an air inlet of the fuel cell stack to supply the air for reaction in the fuel cell stack.

A source of cryogenic H₂ can be connected in fluid communication to supply H₂ to fuel the fuel cell stack for production of electrical power. A coolant circuit can be in fluid communication with an internal heat exchanger of the fuel cell stack for cooling the fuel cell stack. The coolant circuit can include a second heat exchanger having a coolant passage in thermal communication with an H₂ passage. An inlet of the H₂ passage can be connected in fluid communication with the source of cryogenic H₂. The coolant circuit can include a coolant tank downstream of the second heat exchanger, a coolant pump downstream of the coolant tank, and the internal heat exchanger of the fuel cell stack downstream of the coolant pump. The coolant circuit can include a bypass valve upstream of the second heat exchanger. The bypass valve can be configured to divert flow around the second heat exchanger through a coolant bypass passage from the bypass valve to the coolant tank. An outlet of the H₂ passage can be in fluid communication with a reactive portion of the fuel cell stack for supplying H₂ as fuel for the fuel cell stack.

An outlet of the H₂ passage can be in fluid communication with a gas expansion turbine operatively connected to provide rotational power to a motor/generator and/or an air compressor for compressing ambient air to supply to an environmental control system (ECS) of an aircraft by extracting power in the gas expansion turbine from H₂ passing through the gas expansion turbine. The gas expansion turbine can include an H₂ outlet in fluid communication with a third heat exchanger operatively connected to a cooling loop for cool one or more electrical machines or power electronics. Fluid in the coolant loop can be in thermal communication with an H₂ circuit passing through the third heat exchanger. The H₂ circuit of the third heat exchanger can include an H₂ outlet in fluid communication with the a reactive portion of the fuel cell stack for supplying H₂ as fuel for the fuel cell stack. A branch line from the source of cryogenic H₂ can supply H₂ as fuel to a combustor of a gas turbine engine.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, preferred embodiments thereof will be described in detail herein below with reference to certain figures, wherein:
Fig. 1 is a schematic view of an embodiment of a system constructed in accordance with the present disclosure, showing the H₂O and air heat exchanger operatively connected to the fuel cell stack; and
Fig. 2 is a schematic view of the system of Fig. 1, showing a gas expansion turbine connected to the system for extracting power from expanding H₂.

### DETAILED DESCRIPTION OF THE PREFERRED EMBODIMENTS

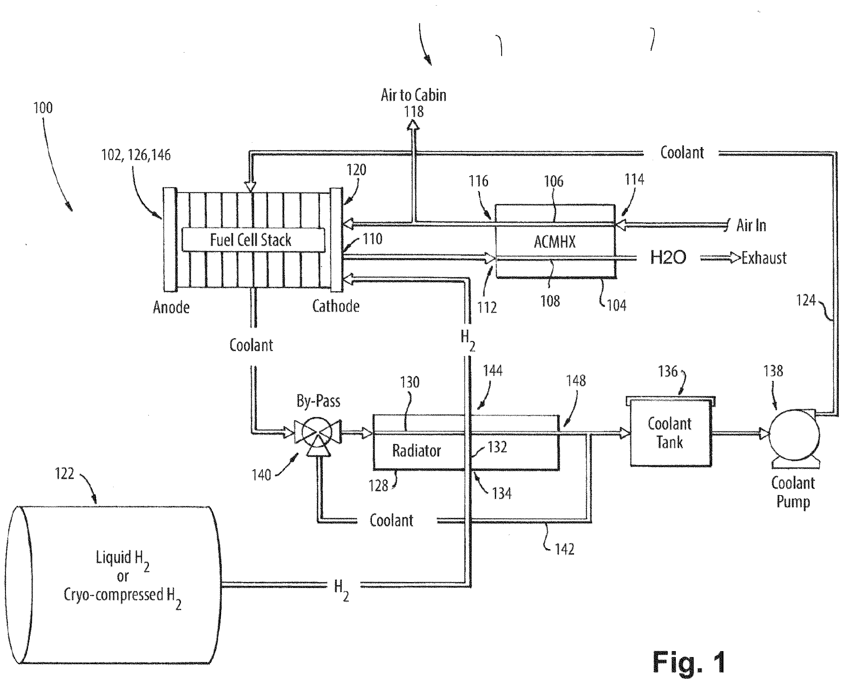

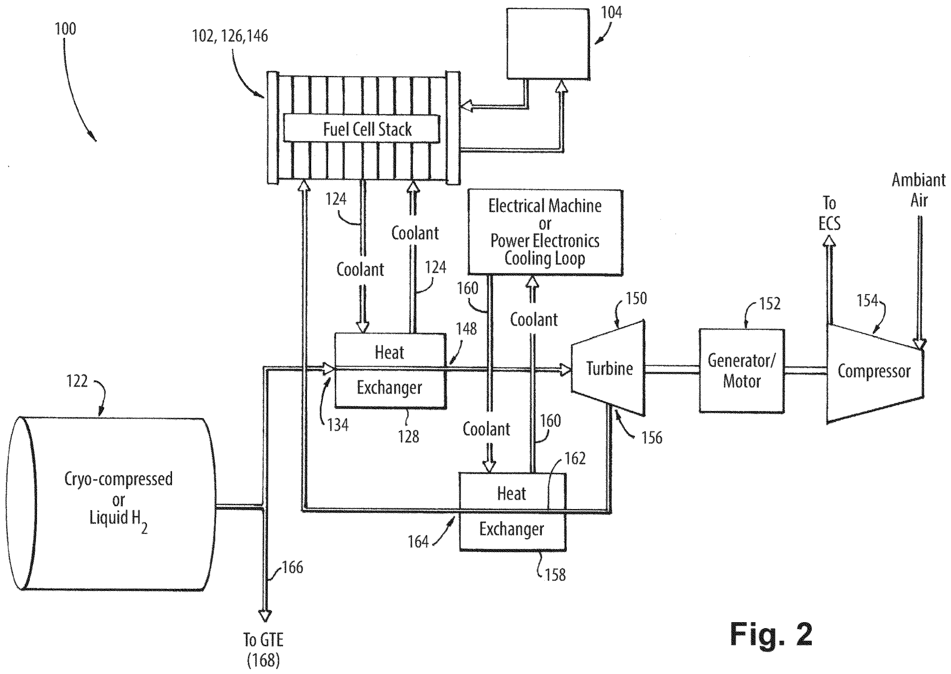

Reference will now be made to the drawings wherein like reference numerals identify similar structural features or aspects of the subject disclosure. For purposes of explanation and illustration, and not limitation, a partial view of an embodiment of a system in accordance with the disclosure is shown in Fig. 1 and is designated generally by reference character 100. Other embodiments of systems in accordance with the disclosure, or aspects thereof, are provided in Fig. 2, as will be described. The systems and methods described herein can be used to utilize heat sinking capacity and gas expansion power of cryogenically stored H₂ otherwise used as fuel for fuel cell and/or gas turbine engine power generation.

The system 100 includes a fuel cell stack 102. A first heat exchanger 104 has an air passage 106 in thermal communication with an H₂O passage 108 for heat exchange between air and H₂O. An exhaust outlet 110 of the fuel cell stack 102 is connected in fluid communication with an H₂O inlet 112 of the heat exchanger 104 for supplying a stream of H₂O exhausted from fuel/air reactions in the fuel cell stack 102 to the heat exchanger 104. The heat exchanger 104 can be part of an air cycle machine (ACM), i.e. the refrigeration unit of an environmental control system (ECS) of an aircraft. The heat exchanger 104 can reject heat from ACM air into the stream of H₂O exhausted from the fuel cell stack 102. With this heat exchanger 104, the traditional aircraft door for outside air can be eliminated, which in traditional systems in needed to reject the ACM heat. The heat exchanger 104 can be a primary ACM heat exchanger or a secondary ACM heat exchanger.

The air passage 106 of the heat exchanger 104 has an inlet 114 connected to receive air inlet from a source such as bleed from the compressor of the gas turbine engine 168 or from external air compressed by an electric cabin air compression system provided to an air cycle machine, or the like. Air from the outlet of an air cycle machine can be provided to the ACM heat exchanger. The air passage 106 of the heat exchanger 104 has an outlet 116 in fluid communication with both an aircraft cabin 118 for supplying air conditioned air from the heat exchanger 104 to the aircraft cabin 118 or a portion of the air cycle cooling system, and with an air inlet 120 of the fuel cell stack 102 to supply the air for reaction in the fuel cell stack 102.

A source 122 of cryogenic H₂, such as a tank of liquid hydrogen or cryogenically compressed hydrogen, is connected in fluid communication to supply H₂ to fuel the fuel cell stack 102 for production of electrical power. A coolant circuit 124 is in fluid communication with an internal heat exchanger 126 of the fuel cell stack 102 for cooling the fuel cell stack 102. A second heat exchanger 128, e.g. a radiator, has a coolant passage 130 in thermal communication with an H₂ passage 132. An inlet 134 of the H₂ passage is connected in fluid communication with the source 122 of cryogenic H₂. The coolant circuit 124 includes a coolant tank 136 downstream of the second heat exchanger 128, a coolant pump 138 downstream of the coolant tank 136, and the internal heat exchanger 126 of the fuel cell stack 102 downstream of the coolant pump 138. The coolant circuit 124 includes a bypass valve 140 upstream of the second heat exchanger 128. The bypass valve 140 is configured to divert flow around the second heat exchanger 128 through a coolant bypass passage 142 from the bypass valve 140 to the coolant tank 136. An outlet 144 of the H₂ passage 132 is in fluid communication with a reactive portion 146 of the fuel cell stack 102 for supplying H₂ as fuel for the fuel cell stack 102 to produce electrical power, e.g. accessible at the anode and cathode labeled in Fig. 1.

With reference now to Fig. 2, an outlet 148 of the H₂ passage 130 (shown in Fig. 1) is in fluid communication with a gas expansion turbine 150 operatively connected to provide rotational power to a motor/generator 152 and/or an air compressor 154, e.g. for compressing ambient air to supply to an ECS of the aircraft by extracting power in the gas expansion turbine 150 from H₂ passing through the gas expansion turbine 150. The gas expansion turbine 150 includes an H₂ outlet 156 in fluid communication with a third heat exchanger 158 operatively connected to a cooling loop for cool one or more electrical machines or power electronics. Fluid in the coolant loop 160 is in thermal communication with an H₂ circuit 162 passing through the third heat exchanger 158. The H₂ circuit 162 of the third heat exchanger 158 includes an H₂ outlet 164 in fluid communication with the a reactive portion 146 of the fuel cell stack 102 for supplying H₂ as fuel for the fuel cell stack 102. A branch line 166 from the source 122 of cryogenic H₂ supplies H₂ as fuel to a combustor of a gas turbine engine 168. The heat exchangers 128, 158 can be employed for providing a heat sink for fuel cell coolant, oil cooling, ACM air, and for ACM gas compression (similar to cabin air compression, CAC) using H2 expansion energy.

Systems and methods as disclosed herein provide potential benefits in including the following. Using extracted water from fuel cells provides cooling for ACM heat exchangers and/or electronics cooling. This can eliminate need for additional power electronics cooling systems (PECS). In addition systems and methods as disclosed herein can provide for extracting additional electric power by absorbing rejected heat from fuel cells and expanding H₂ in turbines.

The methods and systems of the present disclosure, as described above and shown in the drawings, provide for utilizing heat sinking capacity and gas expansion power of cryogenically stored H₂ otherwise used as fuel for fuel cell and/or gas turbine engine power generation. While the apparatus and methods of the subject disclosure have been shown and described with reference to preferred embodiments, those skilled in the art will readily appreciate that changes and/or modifications may be made thereto without departing from the scope of the invention as defined by the claims.

## Claims

1. A system comprising:
a fuel cell stack (102); and
a heat exchanger (104) having an air passage (106) in thermal communication with an H₂O passage (108) for heat exchange between air and H₂O, wherein an exhaust outlet (110) of the fuel cell stack is connected in fluid communication with an H₂O inlet (112) of the heat exchanger for supplying H₂O to the heat exchanger.

2. The system as recited in claim 1, further comprising a source of cryogenic H₂ connected in fluid communication to supply H₂ to fuel the fuel cell stack for production of electrical power.

3. The system as recited in claim 2, further comprising a coolant circuit (124) in fluid communication with an internal heat exchanger (126) of the fuel cell stack for cooling the fuel cell stack.

4. The system as recited in claim 3, wherein the heat exchanger is a first heat exchanger and wherein the coolant circuit includes a second heat exchanger (128) having a coolant passage (130) in thermal communication with an H₂ passage, wherein an inlet of the H₂ passage is connected in fluid communication with the source of cryogenic H₂.

5. The system as recited in claim 4, wherein the coolant circuit includes a coolant tank (136) downstream of the second heat exchanger, a coolant pump (138) downstream of the coolant tank, and the internal heat exchanger of the fuel cell stack downstream of the coolant pump.

6. The system as recited in claim 5, wherein the coolant circuit includes a bypass valve (140) upstream of the second heat exchanger, wherein the bypass valve is configured to divert flow around the second heat exchanger through a coolant bypass passage (142) from the bypass valve to the coolant tank.

7. The system as recited in claim 4, 5 or 6, wherein an outlet of the H₂ passage is in fluid communication with a reactive portion of the fuel cell stack for supplying H₂ as fuel for the fuel cell stack.

8. The system as recited in any of claims 4 to 7, wherein an outlet of the H₂ passage is in fluid communication with a gas expansion turbine (150) operatively connected to provide rotational power to a motor/generator (152) and/or an air compressor (154) for compressing ambient air to supply to an environmental control system, ECS, of an aircraft by extracting power in the gas expansion turbine from H₂ passing through the gas expansion turbine.

9. The system as recited in claim 8, wherein the gas expansion turbine (150) includes an H₂ outlet in fluid communication with a third heat exchanger (158) operatively connected to a cooling loop for cool one or more electrical machines or power electronics, wherein fluid in the coolant loop is in thermal communication with an H₂ circuit (162) passing through the third heat exchanger.

10. The system as recited in claim 9, wherein the H₂ circuit of the third heat exchanger includes an H₂ outlet in fluid communication with a reactive portion of the fuel cell stack for supplying H₂ as fuel for the fuel cell stack.

11. The system as recited in claim 8, further comprising a branch line (166) from the source of cryogenic H₂ for supplying H₂ as fuel to a combustor of a gas turbine engine.

12. The system as recited in any preceding claim, wherein the air passage of the heat exchanger has an inlet connected to receive air inlet from a source.

13. The system as recited in any preceding claim, wherein the air passage of the heat exchanger has an outlet in fluid communication with an aircraft cabin for supplying air conditioned air from the heat exchanger to the aircraft cabin.

14. The system as recited in any preceding claim, wherein an air outlet of the heat exchanger is connected in fluid communication with an air inlet of the fuel cell stack to supply the air for reaction in the fuel cell stack.

15. The system as recited in any preceding claim, wherein the air passage of the heat exchanger has an outlet in fluid communication with both:
an aircraft cabin for supplying air conditioned air from the heat exchanger to the aircraft cabin; and
an air inlet of the fuel cell stack to supply the air for reaction in the fuel cell stack.
